# EUROPEAN PATENT APPLICATION

(11) **EP 2 645 284 A1**
(43) Date of publication of application: **02.10.2013**
(21) Application number: 11843649.2
(22) Date of filing: 25.10.2011
(51) Int. Cl.: G06F 21/20, G06F 21/24, G06K 17/00, G06K 19/10, H04L 9/32

(54) **SERVER SYSTEM, METHOD FOR EXECUTING SERVER SYSTEM, AND EXTERNAL MEMORY**

(30) Priority: 24.11.2010 JP 2010261643
(71) Applicant: IZE Co., Ltd., Mie 515-0501 (JP)
(72) Inventor: KAWABE Hiroshi, Ise-City Mie 515-0501 (JP); OHTANI Yoshikatsu, Ise-City Mie 515-0501 (JP); NISHIWAKI Toshiharu, Ise-City Mie 515-0501 (JP)
(74) Representative: Ilgart, Jean-Christophe
(86) International application number: PCT/JP2011/074536
(87) International publication number: WO 2012/070348

(57) **Abstract**

A system includes an application server connected to a web server and a client terminal via a network, the terminal being connected to an external memory, the application server includes an interface for a provider of a service, a contents database, an attribute database, an ID receiving part for receiving the ID sent from the client terminal connected to the external memory, an authentication part, an attribute information reading part, a display contents generation part and a display contents sending part, the external memory is stored with a program for sending the read ID to the application server from the client terminal and displaying the received display contents on a screen of the client terminal.

## Description

### FIELD OF THE INVENTION

The present invention is related to a client server system, more specifically, a system including a web server and an application server connected to a client terminal via a network, and a method of executing the system and includes a system which uses so called cloud computing.

### BACKGROUND OF THE INVENTION

With the development of communication technologies such as the internet, devices such as personal computers, PDA (Personal Digital Assistant) and mobile phones have become able to easily connect to the internet. A browser is mainly used when these devices connect to the internet. Electronic trading is performed using a browser.

However, in trade with high anonymity there is a risk to a provider that a nominee who is presumed to have purchased a product is actually different to the person who actually bought the product resulting in the provider having to pay a refund.

In addition, by expanding a service, a user must input a URL and input and set an ID and password and remember them, and there is a possibility that the user does not understand how to input the URL and input and set an ID and password or has forgotten their ID or password and eventually can no longer access the service. As a result the required knowledge and skill for using the internet increases making it difficult for a large proportion of elderly people to use services via the internet. In addition, in the case of managing users using IDs and passwords, if the ID and password are not appropriately set, there is a security danger of being impersonated by a third person.

Furthermore, present general internet content is not designed (size and color of characters, color and contents arrangement etc.) in consideration of physical characteristics (presbyopia etc.) due to the age of a user or physical characteristics from birth (color amblyopia/weak eyesight etc.) which greatly affects the usability of the internet and may produce the social problem called "information disparity".

### PRIOR ART DOCUMENTS

### PATENT DOCUMENTS

Patent Document 1: Japanese Laid Open Patent 2002-7904

### SUMMARY OF THE INVENTION

### PROBLEMS TO BE SOLVED BY THE INVENTION

Thus, the present invention provides a system which can perform trade which guarantees the identity of a user and can perform trade with a level of reliability to a provider. In addition, a system and operation method of a the system is provided which can perform trade safely for a user who does not need to worry about being impersonated and connected to a different page since they can be automatically connected to a page providing a service of a provider by merely inserting or passing an external memory or IC card etc distributed by a provider which can physically specify an individual into or over a client terminal. In addition, a system and operating method of the system is provided which promotes easy use of the internet via a display design optimized for each user generated dynamically which has excellent security without fear of operational error.

### MEANS FOR SOLVING THE PROBLEMS

A system related to an embodiment of the invention is provided including an application server connected to a web server and a client terminal via a network, the terminal being connected to an external memory, wherein the application server includes an interface for a provider of a service receiving input of attribute information of a user of the external memory and contents information from the web server or a terminal of a service provider managing the web server, a contents database correlating and storing the attribute information and contents information received from the interface for a provider of a service, an attribute database correlating and storing an ID stored in the external memory and the attribute information of a user of the external memory, an ID receiving part receiving the ID sent from the client terminal connected to the external memory, an authentication part judging permission of use of the external memory by referring to the received ID and the attribute information database, an attribute information reading part reading the attribute information correlated with the ID received from the ID receiving part and stored in the attribute information database, a display contents generation part reading contents information correlated with the attribute information read by the attribute information reading part and stored in the contents database and generates display contents, and a display contents sending part sending the display contents, and wherein the external memory is stored with a program for reading the ID stored in the external memory to the client terminal, sending the read ID to the application server from the client terminal, the client terminal receives the display contents sent from the application server, and the program displays the received display contents on a screen of the client terminal.

In addition, a method of operating a system related to another embodiment of the present invention is provided including an application server connected to a web server and a client terminal via a network, the terminal being connected to an external memory, wherein the application server includes an interface for a provider of a service receiving input of attribute information of a user of the external memory and contents information from the web server or a terminal of a service provider managing the web server, a contents database correlating and storing the attribute information and contents information received from the interface for a provider of a service, an attribute database correlating and storing an ID stored in the external memory and the attribute information of a user of the external memory, an ID receiving part receiving the ID sent from the client terminal connected to the external memory, an authentication part judging permission of use of the external memory by referring to the received ID and the attribute information database, an attribute information reading part reading the attribute information correlated with the ID received from the ID receiving part and stored in the attribute information database, a display contents generation part reading contents information correlated with the attribute information read by the attribute information reading part and stored in the contents database and generates display contents, and a display contents sending part sending the display contents.

In addition, a method of operating a system related to another embodiment of the present invention is provided including an application server connected to a web server and a client terminal via a network including an attribute database correlating and storing an ID stored in an external memory connected to the client terminal and attribute information of a user of the external memory, the application server, receiving input of attribute information of a user and contents information from the web server or a terminal of a service provider managing the web server and correlating and storing the received attribute information and contents information in a contents database, the client terminal reading a program stored in the external memory and executing the program, and reading an ID stored in the external memory by execution of the program and sending the ID to the application server, the application server receiving the ID from the client terminal, reading the attribute information correlated with the received ID and stored in the attribute information database, reading the contents information correlated with the read attribute information and stored in the contents database, generating display contents and sending the display contents to the client terminal, and the client terminal displaying the received display contents on a screen.

In addition, a method of operating a system related to another embodiment of the present invention is provided including an application server connected to a web server and a client terminal via a network including an attribute database correlating and storing an ID stored in an external memory connected to the client terminal and attribute information of a user of the external memory, the application server receiving input of attribute information of a user and contents information from the web server or a terminal of a service provider managing the web server, and correlating and storing the received attribute information and contents information in a contents database, the client terminal reading a program stored in the client terminal and executing the program, and reading an ID stored in the external memory by execution of the program and sending the ID to the application server; the application server receiving the ID from the client terminal, reading the attribute information correlated with the received ID and stored in the attribute information database, reading the contents information correlated with the read attribute information and stored in the contents database, generating display contents and sending the display contents to the client terminal, and the client terminal displaying the received display contents on a screen.

In addition, an external memory connected to a client terminal related to another embodiment of the present invention is provided including a program reading a stored ID to a client terminal, sending the read ID to an application server connected via a network from the client terminal, sending display contents from the application server to the client terminal, and displaying the received display contents on a screen of the client terminal.

### EFFECTS OF THE INVENTION

It is possible to carry out trading guaranteeing the identity of a person and with a high level of reliability for a provider using the present invention. Furthermore, it is possible for a provider to provide a service with excellent customization and provide contents which match a user layer. In addition, a provider can manage user personal information using its own database.

In addition, because a user can easily and safely carry out trading by using a web service with excellent security without fear of operation errors, it is possible to reduce obstacles to the use of a service and significantly increase the number of users. Although a user often cannot obtain a desired ID in a particular internet service and often forgets their ID, because it is not necessary to store different IDs for each service by using a physical USB memory or IC card etc., the use of an internet service is further promoted.

Furthermore, a person providing an application server can easily carry out billing or premium services etc. according to the number of times a user has used a service by becoming an intermediary between users and providers. In addition, by providing the system related to the present invention to a plurality of providers it is possible to link with multiple providers and carry out business without adding significant changes to the system itself. In addition, because it is possible for providers to customize the screen provided to users, it is possible to reduce management costs of providing an application service related to management of a screen.

### BREIF EXPLANATION OF THE DRAWINGS

Fig. 1 is an exemplary diagram showing a system related to one embodiment of the present invention.
Fig. 2 is a block diagram showing the structure of an application server related to one embodiment of the present invention.
Fig. 3 is a flowchart showing a process for a service provider to register contents in an application server in the system related to one embodiment of the present invention.
Fig. 4 is an exemplary diagram showing an example of linking the system related to one embodiment of the present invention to an external system.
Fig. 5 is a block diagram showing an internal structure of an external memory 400.
Fig. 6 is a flowchart for explaining a series of operations from connecting the external memory 400 to a client terminal 300, displaying contents to beginning use of a service.
Fig. 7 is a diagram exemplifying the structure of a screen displayed on the client terminal 300.
Fig. 8 is an example of a screen displayed on the client terminal 300.
Fig. 9 is a diagram exemplifying the structure of a screen displayed on the client terminal 300.
Fig. 10 is an example of a message displayed on the client terminal 300.
Fig. 11 is an example of a screen when the system related to one embodiment of the present invention is used in an internet market.
Fig. 12 is an example of a message displayed on a screen when the system related to one embodiment of the present invention is used in an internet market.

### EMBODIMENTS FOR REALIZING THE INVENTION

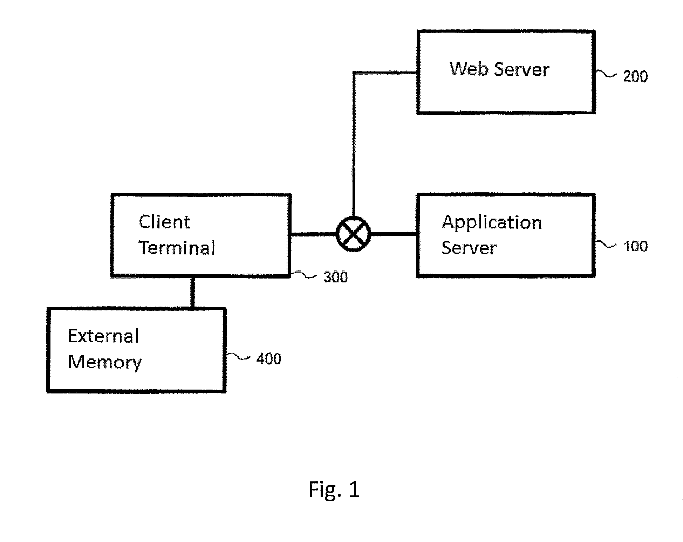

Fig. 1 is an exemplary diagram showing a system related to one embodiment of the present invention.

Referring to Fig. 1, an application server is connected to a web server 200 and a client terminal 300 via a network and an external memory 400 is connected to the client terminal 300. In addition, the web server 200 and the client terminal 300 are also connected via a network.

Although the connection between the application server 100, the web server 200 and the client terminal 300 is performed via a network such as the internet for example, a dedicated line may also be used depending on the service provided.

The application server 100 is formed from a processor, a memory, a storage device, a hard disk etc and a network card, operates via a server operating system and can be physically comprised from one server or a plurality of clustered servers according to the scale of the services provided. The application server 100 can be a plurality of combined servers managed by different providers and different functions may be provided from a plurality of servers. An application engine for generating a screen provided to a client terminal or a database engine for database management are executed on the application server 100. Information handled by the application server 100 may be written as XML data for example.

The web server 200 is a server used in providing a service by a provider of web services to a user of a service using the client terminal 300. The web server 200 can be an existing server which is operated by a service provider before connection with the application server 100. Services provided by the web server 200 include internet markets, image content distribution, web electronic charts, or functions for providing drawings such as building designs etc. Furthermore, in the present embodiment, in the case of using the expression web server 200 also includes a server providing a web service and a database of a service provider linked with a server providing a service.

The external memory 400 can record programs and unique IDs. The external memory 400 may also be attachable and removable to and from the client terminal 300. The external memory 400 may be a flash memory, what is called a USB (universal Serial Bus) memory connected with client terminal 300 via a USB interface, and can be selected according the type of service provided and client terminal 300. For example, in the case where the client terminal 300 is a TV, the external memory 400 may be a set-top box (STB) or may be connected to a STB. In addition, the external memory 400 may be connected directly to the TV. In addition, the external memory 400 may also be but not limited to an SD memory card such as microSD, microSDHC or microSDXC, or IC cards such as a contact type IC card or non-contact type IC card described below.

As described below, because it is preferred that when the external memory 400 is connected, a program stored in the external memory is automatically started and the program automatically closes when connection to the external memory is interrupted, the external memory 400 and the client terminal 300 are preferred to be hot swap compatible.

The client terminal 300 includes an interface which the external memory 400 can connect to, and can connect via a network with the application server 100 and the web server 200. The client terminal 300 is a PC, TV or Pad PC etc. The client terminal 300 can be operated via a touch panel, a remote control, a keyboard or mouse etc. Because the level of ability required to operate the client terminal 300 is compatible with a plurality of users it is preferred that intuitive operation is possible.

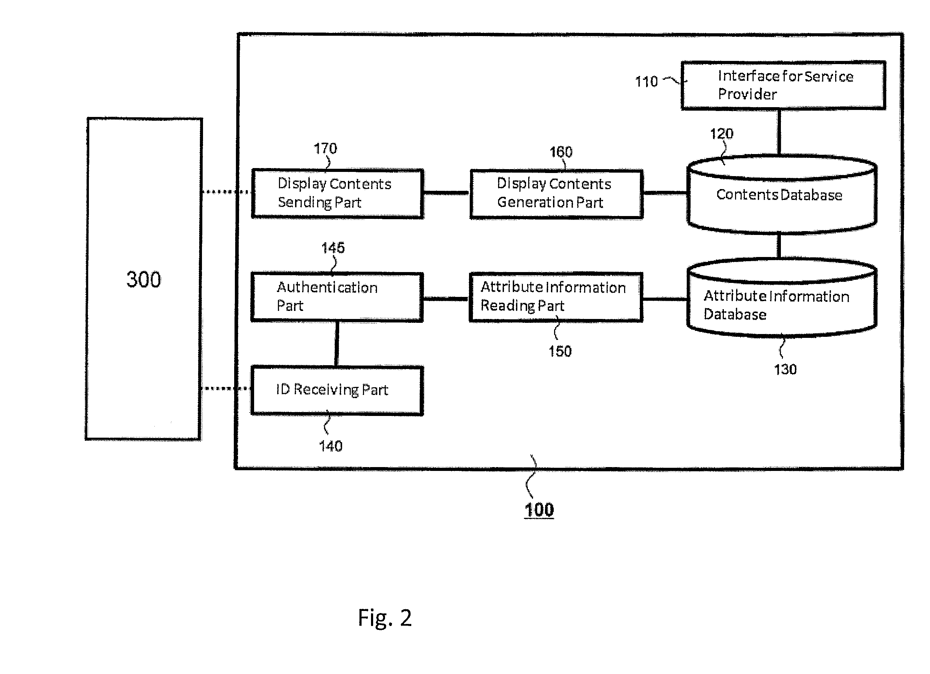

Fig. 2 is a block diagram showing the structure of an application server related to one embodiment of the present invention.

The application server 100 includes an interface for a service provider 110, a contents database 120, an attribute information database 130, an ID receiving part 140, an authentication part 145, an attribute information reading part 150, a display contents generation part 160 and a display contents sending part 170.

The interface for a service provider 110 receives and manages an ID of the external memory 400, attribute information of user and contents information form a service provider providing services using the web server 200.

Attribute information is information for categorizing a user according to each characteristic of the user who uses the external memory 400 by connecting to the client terminal 300 and is used for providing services according to each category. The attribute information can be and not limited to residential area, age, gender, occupation, interests and tastes etc.

Contents information is information for determining which information is displayed on a screen displayed on the client terminal 300 by the application server 100. For example, contents information may be information including an icon and the URL of a link correlated with the icon or a message displayed on the client terminal 300 and information including the URL of a link correlated with the message. In addition, the contents information may also include the start and finish period for that information to be displayed. Furthermore, the contents information may also include setting an event in the case where that content is selected. When the contents information is an icon or message, the icon or message may be image data or video data having a format such as but not limited to JPEG, PNG, GIF or flash video (SWF, FLV) etc.

The interface for a service provider 110 may provide a management screen to a service provider. In this case, the service provider for example inputs an ID and password to login to a management screen and performs registration and changes to attribute information and contents information.

In addition, in the management screen, the service provider may input an ID and register start of use of a service with respect to a specified ID and input an ID and register end of use of a service with respect to a specified ID.

Furthermore, unlike the description above, the interface for a service provider 110 may be formed in order to receive attribute information or contents information from the web server 200 or a database when connecting to the web server 200 or a database owned by a service provider.

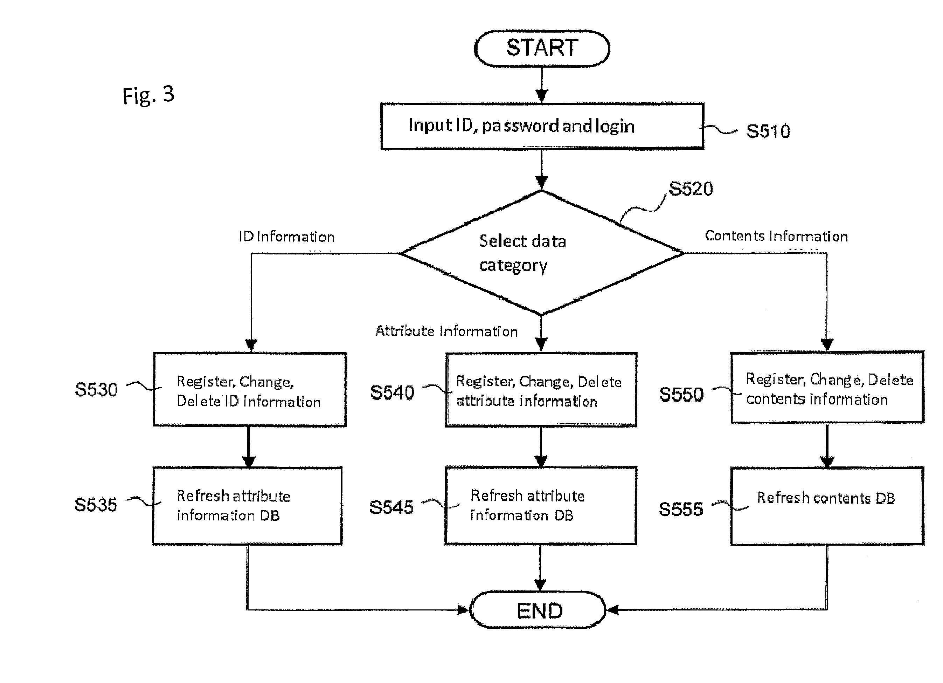

Fig. 3 is a flowchart showing an example of a process registering an ID, attribute information or contents information in the interface for a service provider 110 related to one embodiment of the present invention. Here, the interface for a service provider 110 is assumed to provide a management screen.

A service provider logs in to the management screen (S510). Login is performed by inputting an ID and password allocated by the service provider for example.

Registration a category for changing the details for registration is selected in the management screen (S520). The data category may be an ID, attribute information or contents information described above.

In the case where ID is selected as the data category, new ID information is registered or registration details with respect to an existing ID are changed or deleted (S530). An ID and ID effective period are examples of the registration details.

When ID information is registered, changed and deleted in the management screen, the details are reflected in the attribute information database 130 (S535).

In the case where attribute information is selected as the data category, an attribute is registered or registered details are changed or deleted (S540). A residential area, age, gender, occupation, interests and tastes described above are examples of the attributes.

When attribute information is registered, changed and deleted in the management screen, the details are reflected in the attribute information database 130 (S545).

In the case where contents information is selected as the data category, content is registered or registered details are changed or deleted (S550). As described above, an icon or message displayed on the screen of a client terminal and URLs etc related to these are examples of the contents information.

When contents information is registered, changed and deleted in the management screen, the details are reflected in the contents database 120 (S555).

Returning to Fig. 2, the contents database 120 correlates and stores the attribute information and contents information received from the web server interface.

Each contents information is stored in a state that can specify an attribute of a user who is being provided with the content in the contents database 120.

The attribute information database 130 correlates and stores an ID stored in an external memory and attribute information of a user of the external memory.

It is possible to understand the attribute information of a user of an external memory in the application server 100 by correlating and storing an ID and attribute information. The application server 100 can display a screen customized according to attributes of a user on the client terminal 300 by correlating attribute information and contents information in the contents database 120 and correlating an ID and attribute information in the attribute information database 130.

Furthermore, although the attribute information database 130 correlates and stores IDs with attribute information, if the name or address of a user is not included as an attribute, it is possible to design the system so that the user can not be specified in the application server 100, client terminal 300 or external memory 400. Therefore, in the system related to one embodiment of the present invention, because personal information is managed on the side of the service provider without the personal information being held by the application server 100, there is no danger of personal information being leaked from the application server 100, client terminal 300 or external memory 400.

In addition, in a modified example, when the attribute information database 130 provides contents held by the web server 200, an ID may be sent from the application server 100 to the web server 200, the attribute information may be sent from the web server 200 to the application server 100 and the ID and attribute may be correlated.

The ID reception part 140 receives an ID sent from the client terminal 300 connected to an external memory. A detailed explanation of an ID is given below.

The authentication part 145 references the attribute information database 130 and authenticates whether a received ID can be used or not. In the case where authentication is successful, the authentication part 145 may issue an authentication token. An authentication token is sent to the client terminal 300. The authentication token may also be used in the case of receiving a service from a service provider in the client terminal 300. When a service is used, data attached with the authentication token is sent to the web server 200 from the client terminal 300 and thereby it is possible to provide a service compatible with a user to the client terminal 300 without performing a separate authentication in the web server 200.

In the case when authentication fails in the authentication part 145, after an error is returned to the client terminal 300 and the client terminal 300 displays the error, the program is terminated.

The attribute information reading part 150 reads the attribute information stored in the attribute information database and correlated with the ID received by the ID receiving part.

The display contents generation part 160 reads the contents information stored in the contents database and correlated with the attribute information read by the attribute information reading part, and generates display content which is screen data to be displayed on the client terminal.

The display content is screen data which includes an icon or a message including a link to be displayed on a screen and maybe a virtual desktop environment for example. The display content may also be generated as Flash data for example.

The display contents sending part 170 sends display content data to the client terminal 300.

The client terminal 300 receives the display content sent from the application server 100, displays the display content on the client terminal 300 via a program stored in the external memory 400 and present the content to the user. The user can select content on the screen and receive a desired service.

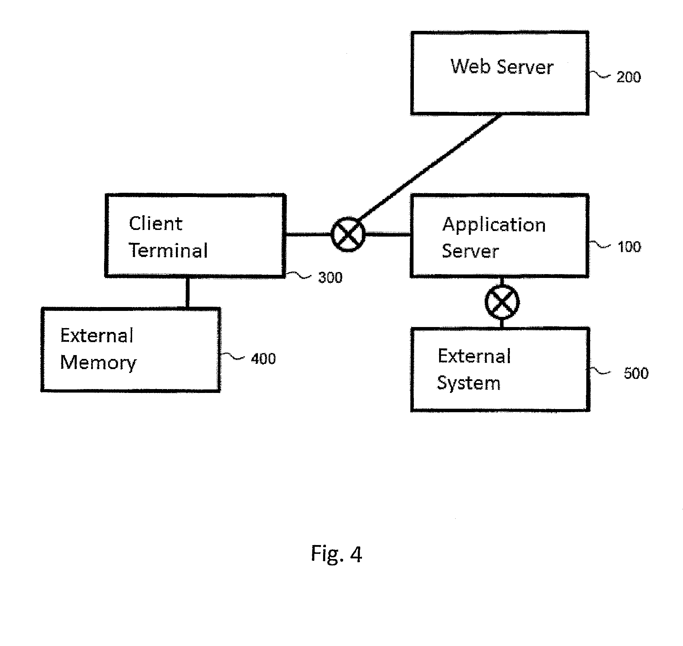

The application server 100 may be arranged with an API for linking to other systems as is shown in Fig. 4. It is possible to use the API to further expand services provided on the system by linking to other systems. For example, it is possible to easily perform billing by linking with a billing system, easily perform distribution when products are purchased on a system linking to a distribution system and guarantee a higher level of security with respect to system use by a user when authentication functions are used on other systems. In addition, it is also possible to guarantee the identity of a person with a higher level of security and reduce the risk of refunds when a third party fraudulently uses a system.

In addition, the application server 100 may also include a usage history management database (not shown in the diagram) for managing the usage history for each ID. Usage history includes the day and time of use, the number of times used and the accessed URL for example. The application server 100 may also sent usage history for each ID stored in the usage history management database to the web server 200 periodically or according to a request from the service provider and may also be displayed in the interface for a service provider 110. Affiliate success results may be stored and managed in the usage history management database in the case where a service provided by a service provider is a shopping site.

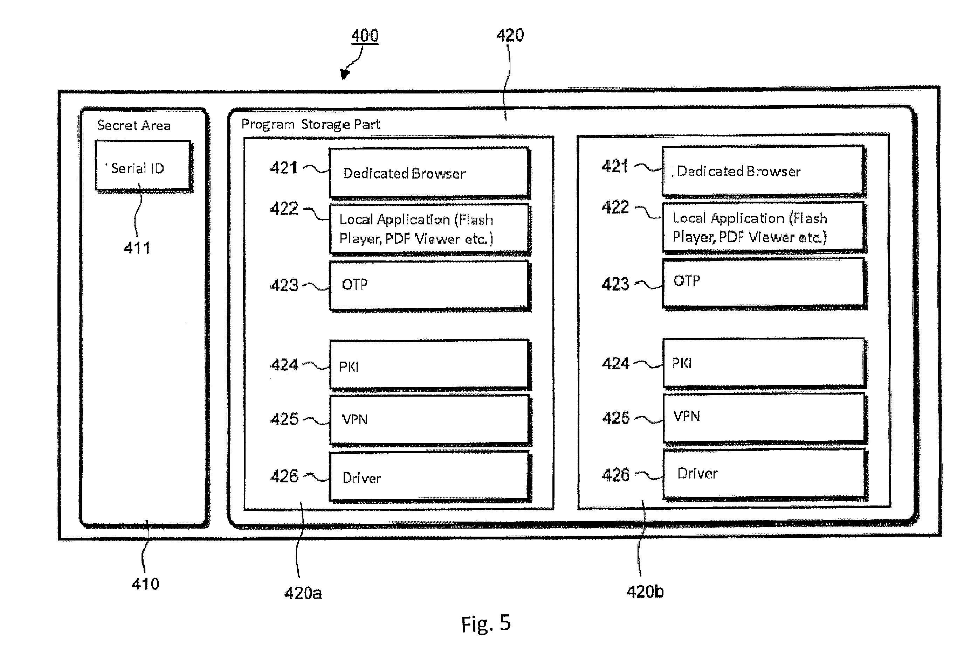

Fig. 5 is a block diagram showing an internal structure of an external memory 400.

Referring to Fig. 5, the external memory 400 includes a region 410 for storing an ID, and a program storage part 420 which stores software such as a dedicated browser etc.

An ID 411 is stored in the region 410. The region 410 may have tamper-resistant. The ID 411 stored in the region 410 is a unique serial ID provided in advance to each external memory 400. The ID 411 is stored in the region 410 as data which cannot be viewed, changed or copied by a user. When the external memory 400 is connected to the client terminal 300, the ID 411 is read to the client terminal 300, sent to the application server 100 and a user is identified using the ID 411.

Because each ID 411 is a unique numerical value in each external memory 400, it is possible to identify a user without the using inputting a separate user ID or password. As a result, in the system related to one embodiment of the present invention, it is possible to connect to an application server without a user setting a user ID or password and avoid the risk of a user forgetting a password and not being able to use a service. In addition, unlike the case of using a user ID or password in order to use a service, because a media physically exists such as the external memory 400 it is possible to reduce the concern caused by being impersonated by a third party and gain users who previously refrained from using the service due to such concern.

In addition, because each ID 411 is a unique numerical value in each external memory 400, by that the service provider understands the attributes of a user without passing through the system in advance and that the service provider distributes the external memory 400 to users after performing an identity authentication, a service provider which possess the web server 200 can guarantee the identity of the users that connect the external memory 400 to the client 300 and use the system. That is, for example, in the case where a user ID and password are set via the internet and user registration is performed, it is difficult to ascertain whether a person a user of the system is a registered user or whether a registered user is a person corresponding to the information which is actually registered. However, in the system related to an embodiment of the present invention, because it is possible to understand the information with respect to a user in advance and distribute the external memory 400 to the actual user without passing through the system and the system cannot be connected to without using the external memory 400, it is possible to guarantee the identity of the user. In particular, although authentication of the actual person is performed when a user applies for a credit card or wishes to open a bank account etc, it is possible to guarantee the identity of the user to a high level by distributing the external memory 400 to a person who has been confirmed as the actual user.

Furthermore, as described below, it is possible to guarantee the identity of a user with a high standard by combination with another authentication means.

In addition, by distributing the external memory 400 to a user after understanding the attribute information of the user in advance, when the user connects the external memory 400 it is possible to provide a service customized to that user without the user inputting any information.

In the case where the client terminal 300 is a television receiver, by using a combination of the television and the ID 411 within the external memory 400, because it is possible to automatically specify a user of the television which was conventionally difficulty via the television, It is possible to easily guarantee the identity of a user of online shopping using the television and increase the level of trading safety.

The ID 411 can be set with an effective period and data having an effective period can be stored in the region 410. By setting the ID 411 with an effective period, it is possible to control use of the external memory 400 to a fixed period and in the case where use of a service is continued, it is possible to maintain contact with the user by redistributing the external memory 400 and confirming the attribute information of the user for each fixed period.

In addition, a field may be created for storing attributes such as usage permitted, usage terminated, usage forbidden with respect to the user ID 411 in the attribute information database 130 in the application server 100, and it is possible to manage use of the external memory 400 which includes the specific ID 411 in the application server 100 by storing the relevant attributes. For example, in the case where the external memory 400 is stolen, by forbidding use of the ID 411 in the external memory 400 on the application server 100 side, it is possible to prevent anyone other than the user from using the external memory 400.

Furthermore, the ID 411 stored in the external memory 400 and the ID stored in the attribute information database 130 of the application server 100 may be the same data or different data and ID 411 stored in the external memory 400 and the ID stored in the attribute information database 130 of the application server 100 may also be correlated to enable a user to be specified and stored in the attribute information database 130. In this case, the authentication part 145 refers to the ID 411 and the ID stored in the attribute information database 130 and performs authentication.

The program storage part is arranged with a dedicated browser 421 and a local application 422.

The dedicated browser 421 is software which connects to the application server 100 and displays data of the display contents received from the application server 100 on the client terminal 300. The dedicated browser 421 may be an already existing internet browser plugin and in this case the client terminal 300 is arranged with a separate existing internet browser.

The ID 411 is read by the client terminal 300, sent to the application server 100 by the dedicated browser 421 and authentication of the client terminal 300 is performed.

The dedicated browser 421 is preferred to be automatically read and started when the external memory 400 is connected to the client terminal 300. For example, an operating system of the client terminal 300 or a program for detecting connection detects that the external memory 400 is connected to the client terminal 300. When detected, it is possible to read the program stored at a predetermined address in the external memory 400 and the client terminal 300 executes the read program. In addition, the dedicated browser 421 is preferred to automatically end when the connection between the external memory 400 and the client terminal 300 is released. In this way, it is possible to start and end the dedicated browser 421 just by user connecting or releasing connection between the external memory 400 and the client terminal 300, for example, if the external memory 400 is a USB flash memory, by inserting and removing the USB memory form the client terminal. Because it is possible to start and end the dedicated browser 421 by as simple operation by a user, it is possible to reduce obstacles to use of a service and increase the number of users than in the case where the dedicated browser 421 is started and ended by a separate operation.

In addition, the dedicated browser 421 is preferred to include a management function which can control a keyboard input to the client terminal 300, can control writing to a portable recordable media such as a hard disk installed within the client terminal 300 or can control the processes of a program executed on the client terminal 300. In this way, it is possible to manage writing or recording of information including printing and prevent free copying by a user via writing or recording of information provided by a service, it is possible to write or record only data permitted by a service provider and prevent copying or leaking of information which the service provider does not want copied or leaked. In addition, it is possible to prevent copying or leaking of data within the USB memory 400. In this case it is preferred that the dedicated browser 421 which is automatically started be promptly started after connecting the external memory 400 to the client terminal 300. By automatically and promptly starting the dedicated browser 421, it is possible to prevent copying or leaking of data with certainty. Furthermore, unlike that described above, management software may be arranged in program storage part 420 separate to the dedicated browser 421 and the management function described above may be executed by the management software.

In a web service using the system related to one embodiment of the present invention, because it is possible to prevent copying of information using the management functions described above, it is possible to protect web contents from unauthorized copying etc. without adding some sort of protection to web contents such as HTML which a service provider already possesses. Therefore, in the system related to an embodiment of the present invention, a service provider can continue to protect infringement of copyrights and continue to use its content without additional changes.

The local application 422 is an application for using a specific type of file on a client terminal and can be a Flash Player for using a file in Flash format or a PDF viewer for using a file in the PDF format for example.

A one-time password (OTP) may be executed in the program storage part 420 and it is possible to perform communication between the client terminal 300 and the application server 100 to a high level of security using the OTP.

In addition, software 424 and 425 for using PKI (Public Key Infrastructure) or VPN (Virtual Private Network) can be arranged and communication can be performed with an even greater level of security.

The program storage part 420 may be arranged with a driver 426 for wireless communication of a non-contact type IC card. By arranged the driver 426, it is possible to combine the non-contact type IC card and the external memory 400 without any making any particular settings in the client terminal 300 and it is possible to easily perform billing without a user changing settings for wireless communication with the non-contact type IC card and in addition to authentication by the ID 411 in the external memory 400 it is possible to perform authentication using the non-contact type IC card and further guarantee the identity of a user. Examples of non-contact type wireless communication technologies compatible with the driver 426 are NFC (Near Field Communication), FeliCa or MIFARE but not limited to these.

Furthermore, as a modified example, the non-contact type IC card may also function as the external memory 400. That is, it is possible to mount the function of the external memory 400 described above onto a non-contact type IC card compatible with non-contact type wireless communication technology such as NFC, FeliCa or MIFARE and provide the non-contact type IC card itself as the external memory 400 to a user. In this case, the client terminal 300 is arranged with an interface compatible with non-contact type wireless communication technology such as a non-contact type IC card reader-writer for example. In addition, wireless communication is performed between the external memory 400 which is the non-contact type IC card and the interface arranged on the client terminal 300 and the external memory 400 is connected to the client terminal 300. At this time, an observation application which detects connection between the external memory 400 and the client terminal 400, reads and starts the dedicated browser 421 may be arranged in the client terminal 300. Furthermore, in this case, a plugin which is the dedicated browser 421 can be arranged not in the external memory 400 but in the client terminal 300 and the external memory 400 may be arranged without the program storage part 420.

In this way, it is no longer necessary for a user to separately possess a non-contact type IC card and external memory 400 and it is possible to easily use a service. In addition, it is also no longer necessary for the service provider to separately distribute a non-contact type IC card and external memory 400 to a user and it is possible to easily promote further growth of a service.

Furthermore, in a modified example, a contact type IC card as well as a non-contact type IC card may be used as the external memory 400 and furthermore, a hybrid card or dual interface card which combines the function of non-contact type IC card and contact type IC card may also be used. In addition, a device including an ID unique to the device, a wireless mouse for example, may also be used as the external memory 400. The program storage part 420 is included in the external memory 400 or client terminal 300 according to the memory capacity of each device.

In addition, the program storage part 420 may be arranged with a driver for connecting with a contact type IC card, a driver for connecting with a finger print authentication device or a driver for connecting with a camera or scanner as an alternative driver 426 according to the service provided. In this way, it is possible to perform authentication with greater accuracy and provide various services to a user without the need for a user to install these types of drivers in the client terminal 300.

The external memory 400 may be arranged with a plurality of software regions 420a, 420b including a plurality of dedicated browsers 421, local applications 422, OTP software 423, PKI software 424, VPN software 425 and drivers 426 within the program storage part 420 in order to be compatible with the client terminal 300 on a plurality of different platforms. For example, the region 420a may be a software region for the client terminal 300 which is a person computer running on Windows OS, and the region 420b may be a software region for the client terminal 300 which is a Pad PC running on a Linux based OS. In this way, it is possible to use a service provided from the system on a plurality of platforms using one external memory 400. Furthermore, in the example of Fig. 5, there may be three or more software regions.

Because one external memory 400 can connect to a plurality of client terminals 300 on one platform or different platforms it is possible to use a dedicated desktop customized to a user anytime and anywhere. In this way, at construction sites where it is easy for a terminal to be damaged for example, the same desktop which is uniquely customized can be versatile and be used on a plurality of platforms and thus it is possible to avoid the risk of delays in business due to damage to the terminal.

In addition, while it was conventionally necessary to create web content in a plurality of different formats to be compatible with a plurality of web browsers on a plurality of platforms, in the system related to one embodiment of the present invention, it is possible to create web content for only the dedicated browser 411 installed in the external memory 400 and to reduce the cost of web content creation for service providers.

In this way, it is possible to guarantee the identity of a user, authentication becomes easier and it is possible for a user to more easily use a service by using the external memory 400. In addition, a service provider can provide a service with excellent customization, prevent leaks of information when providing a service and reduce the cost of providing a service to terminals on a plurality of different platforms.

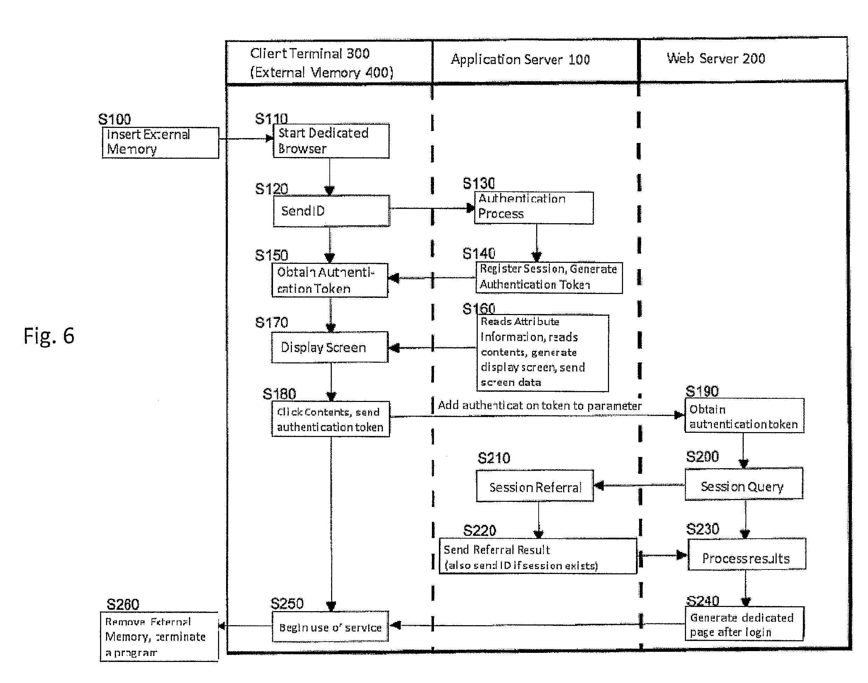

Fig. 6 is a flowchart for explaining a series of operations from connecting the external memory 400 to the client terminal 300, displaying contents to beginning use of a service. Furthermore, as explained using Fig. 3, before a series of operations explained below is started, the application server 100 receives ID information, attribute information of a user and contents information via the interface for a service provider 110, correlates the received ID information and attribute information and stores in the attribute information database 130, and correlates the received contents information and attribute information and stores in the contents database.

Referring to Fig. 6, first, when the external memory 400 is connected to the client terminal 300, the client terminal 300 reads a program stored in the external memory, the program is executed and the dedicated browser 421 is started (S110). Furthermore, in the case where the external memory 400 is a contact type IC card or non-contact type IC card and there is no program storage part 420, the program stored in the client terminal 300 may be automatically executed when connected to the external memory 400 and the dedicated browser 421 started. In the case of a contact type IC card, instead of [insert external memory] in Fig. 6, the external memory 400 is connected to a module terminal for reading on the client terminal 300 side and in the case of a non-contact type IC card, the external memory 400 is connected to the client terminal by wireless communication.

The ID 411 stored in the external memory 400 is read by the program and sent to the application server 100 (S120).

An authentication process of the sent ID 411 is performed in the application server 100 (S130). In case of an authentication error, error is displayed on the client terminal 300. When the ID 411 is authenticated, a session is registered and an authentication token is generated (S140).

The application server 100 sends the authentication token to the client terminal 300 and the client terminal obtains the authentication token (S150).

The application server 100 reads attribute information corresponding to the sent ID 411 from the attribute information database, reads the contents corresponding to the attribute information from the contents database, generates a screen data for displaying the contents on the client terminal 300 and sends the screen data to the client terminal 300 (S160).

The client terminal 300 displays the received screen data (S170).

When the displayed contents such as an icon is clicked in the client terminal 300, information in which the authentication token is added to a parameter is sent from the client terminal 300 to the web server 200 (S180) and the web server 200 obtains the authentication token (S190).

The web server 200 queries the application server 100 whether a session exists with the client terminal 300 corresponding to the authentication token based on the authentication token (S200).

The application server performs a session referral (S210) and sends the session referral result to the web server 200 (S220). At this time, in the case where the referral result shows that a session exists with the client terminal 300, the ID 411 is returned to the web server 200 with the referral result, a login process of the client terminal 300 is performed in the web server 200 and a dedicated page is generated according to the ID 411 (S230∼S240).

The generated dedicated page is sent to the client terminal 300 and use of a service via the dedicated page is started in the client terminal 300 (S250).

When the external memory 400 and the client terminal 300 are not connected, a program such as the dedicated browser 421 is terminated and use of the service is ended (S260). An icon for ending of a program may be displayed in the dedicated browser 421 and the program may be ended when a user selects the icon.

Furthermore, in the process described above, a plurality of services can be used using one external memory 400. For example, when the ID 411 is correlated with a portal site and the external memory 400 is connected to the client terminal 300, first, the portal site is displayed in the dedicated browser in step S170. When a desired service is selected on the portal site, the processes from S180 to S240 are performed with respect to the web server 200 providing that service and use of that service is started in S250. In this way, it is possible to deliver a single sign on function to a plurality of services using the system related to one embodiment of the present invention. Furthermore, in this case it is preferred that the one-time password 423 described above is used.

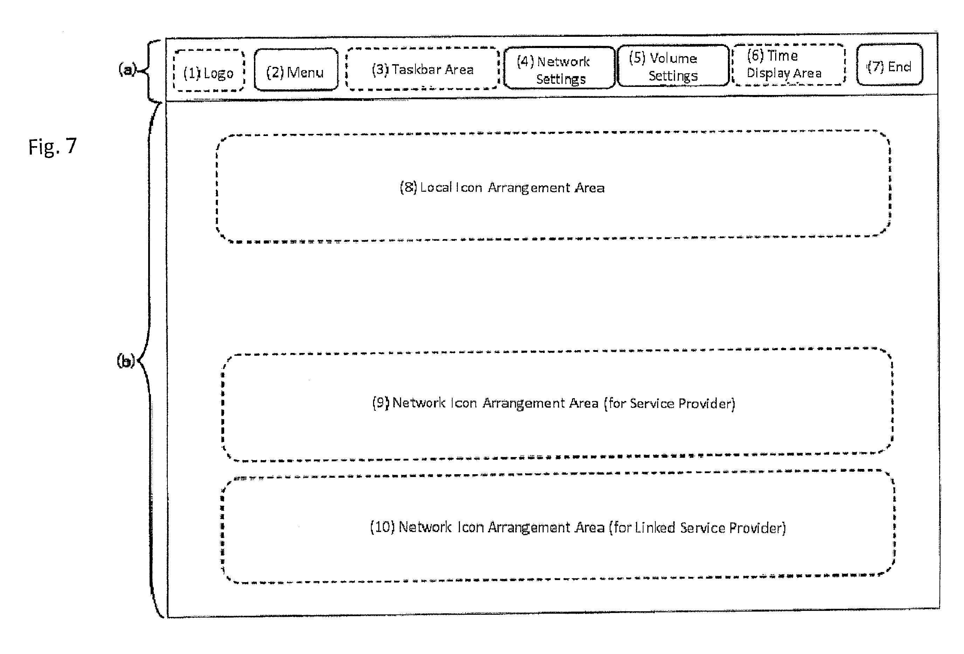

Fig. 7 is a diagram showing an example of a screen displayed in step S170 described above.

Referring to Fig. 7, the screen is formed from a menu bar (a) and a desktop launcher (b).

As is shown in Fig. 7, the menu bar (a) may be arranged with a logo of a service provider, a menu button which displays a menu screen in the desktop launcher (b) when clicked, a taskbar area which displays the taskbar in the desktop launcher (b) when an application is started, a network setting button which displays a network setting screen in the desktop launcher (b) when clicked, a volume setting button which displays a volume setting screen in the desktop launcher (b) when clicked, a time display area which displays the time, and an end button which displays a shutdown confirmation screen in the desktop launcher (b) when clicked. The contents of the menu bar (a) is an example and can be changed according to the service provided.

Various displays are displayed in the desktop launcher (b) using an operation in the menu bar (a) described above. For example, an example of the desktop launcher (b) may be formed from a local icon arrangement area in which the same contents are displayed regardless of the service provider, a network icon arrangement area for service providers in which an icon registered by service providers is arranged, and a network icon arrangement area for linked service providers in which an icon registered by linked service providers is arranged. In this way, in the desktop launcher (b) it is possible to display a screen in the client terminal 300 customized according to the service provider without adding any changes to the setting details of the client terminal 300 or external memory 400.

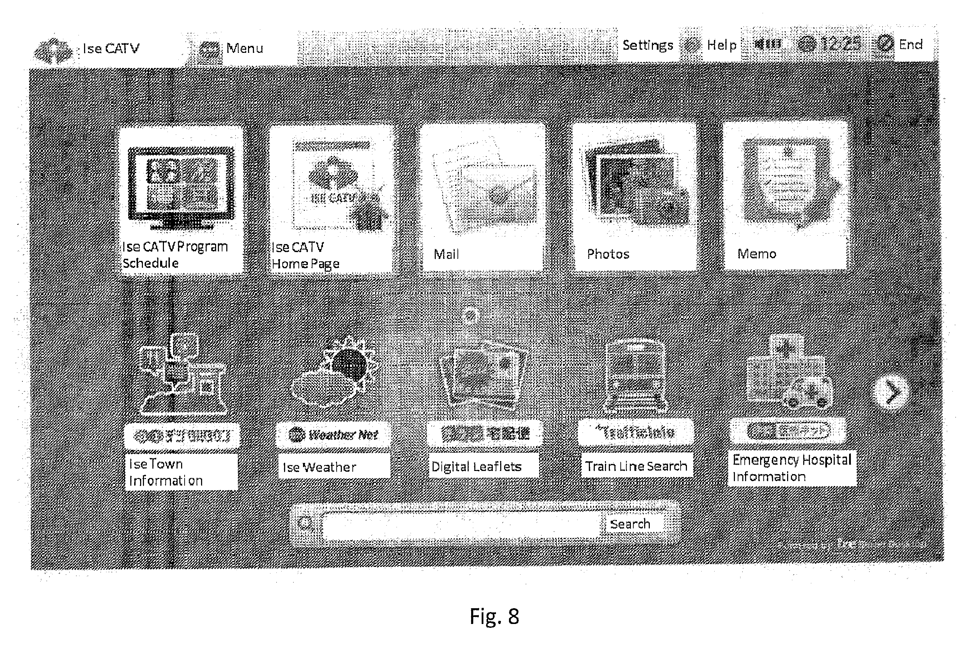

Fig. 8 is an example of a screen displayed in the client terminal 300, for example, a service provider called [Ise CATV] can register a logo to be displayed in a menu bar in the contents database 120, register an icon called [Ise CATV Program Schedule] linked with a web service for providing a service which displays a program schedule or [Ise CATV HomePage] which is linked with the home page of [Ise CATV] and can provide a customized screen to users for using [Ise CATV] as shown in Fig. 8.

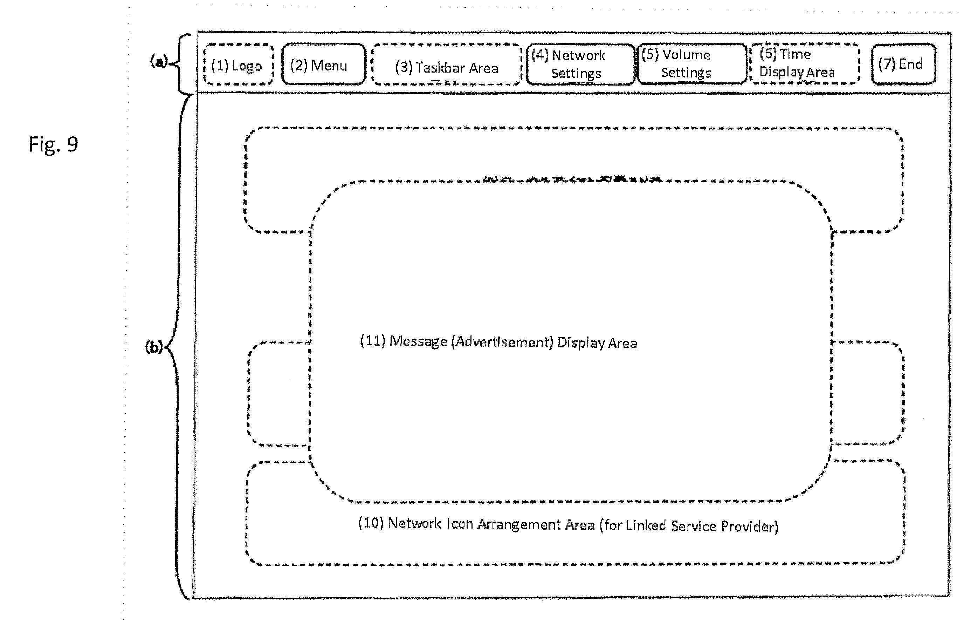

In addition, a message registered by a service provider may be displayed in a message display area as is shown in Fig. 9 and a predetermined timing in the desktop launcher (b). For example, the message can be displayed once when the launcher is sta rted.

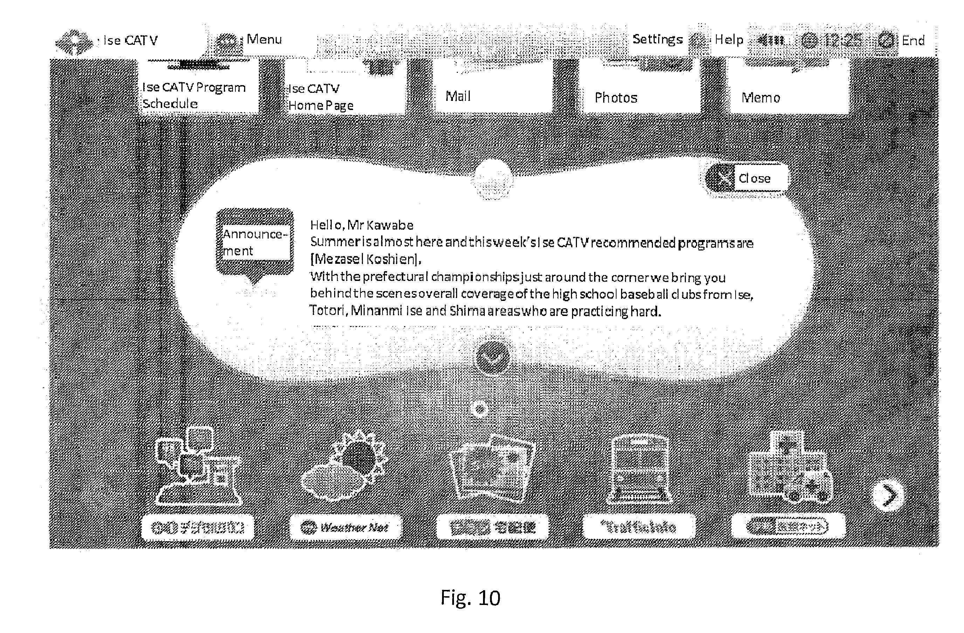

Fig. 10 is an example of a message displayed in the client terminal 300 and for example, it is possible to attract a user's attention by including information to be notified to a user in this message.

Specific examples of a service using the system related to one embodiment of the present invention are explained below.

### (1. Online Shopping System (Internet Supermarket)

A business which owns a supermarket as an actual store can manage a site of an online shopping system (Internet Supermarket) using the system related to an embodiment of the present invention.

That is, a supermarket business which is a service provider can connect its web server 200 and the application server 100 via a network.

In the actual store the internet supermarket business distributes a USB memory, for example, as the external memory 400 to users who are customers of the actual store and requires users to fill in their attribute information into an application form etc.

Furthermore, in the case where a non-contact type IC card such as a members card of the internet supermarket business is used as the external memory 400, the attribute information of a user obtained when applying for the members card can be used.

The internet supermarket business registers user IDs and attribute information via the interface for a service provider 110 in the attribute information database 130 of the application server 100. In addition, the internet supermarket business registers icons and messages corresponding to the display time of attributes and contents in the contents database 120 via the interface for service providers 110.

A user can browse a supermarket site just by inserting a USB memory which is the external memory into a PC which is the client terminal 300 at home etc. and shop at the supermarket.

Conventionally, a user could input a URL, perform registration for using an internet supermarket online and then browse and site and shop at the internet supermarket based on information advertisements etc. distributed at the store. Thus, because a certain level of literacy was required for using a PC in order to use an internet supermarket, the obstacles to using internet supermarkets were high. However, because it is possible to use an internet supermarket just by inserting a USB memory into a client terminal by using the system related to one embodiment of the present invention, it is possible to significantly reduce the obstacles to using an internet supermarket by making literacy unnecessary for using a PC etc. In this way, it is possible to obtain new internet supermarket customers who conventionally refrained from using internet supermarkets.

In addition, in an internet supermarket which uses the system related to one embodiment of the present invention, an internet supermarket business can register users at an actual store and know user's attributes in advance and because external memory 400 can be distributed to the actual user who cannot use the internet supermarket without the external memory 400, it is possible to guarantee the identity of a user when providing a service and significantly reduce the risk of paying refunds due to impersonation by a third party. Because it is possible for the internet supermarket business to understand reliable information of a user, for example, reliable information of a user previously held by the internet supermarket such as reliable information previously used in a billing system, it is possible to provide a service knowing the ability of user to pay etc.

In addition, in an internet supermarket which uses the system related to one embodiment of the present invention it is easy to provide a service customized according to the attributes of a user or time period. For example, it is easy to make a message displayed to a 30 year old woman residing in Tokyo and a message displayed to a 50 year old man residing in Osaka completely different by registering in advance the display target of the message in advance in the contents database 120. In addition, for example it is easy to display different messages using August and December.

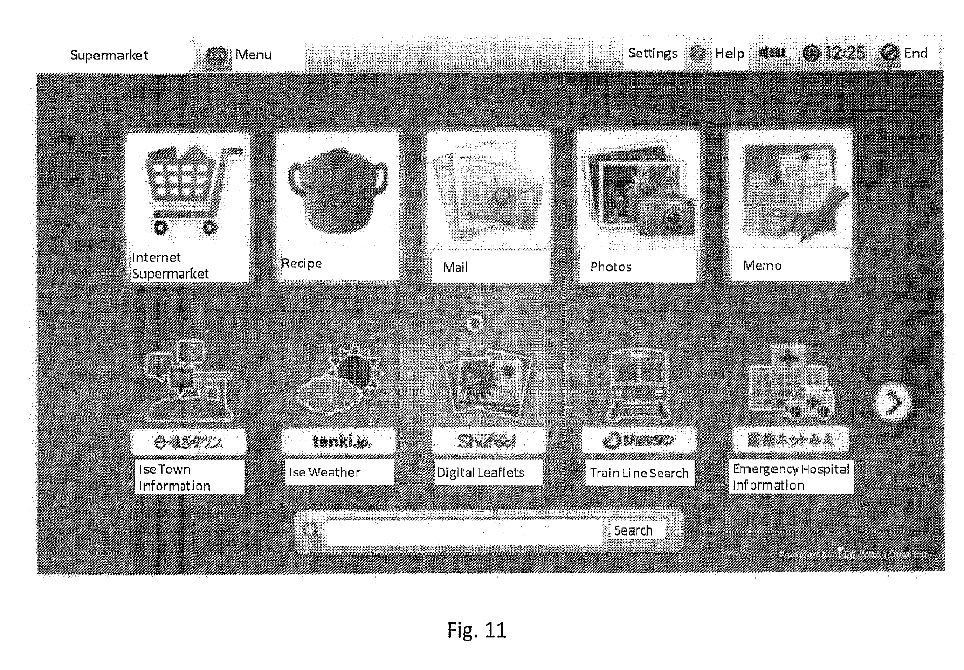

Fig. 11 is an example of an icon displayed in the client terminal 300 for use in an internet supermarket. An icon such as [Internet Supermarket] or [Recipe] etc. are registered in advance by the internet supermarket business in the contents database 120. It is possible to promote usability and the use of an internet supermarket by providing a user with a simple, selection type interface as shown in Fig. 11.

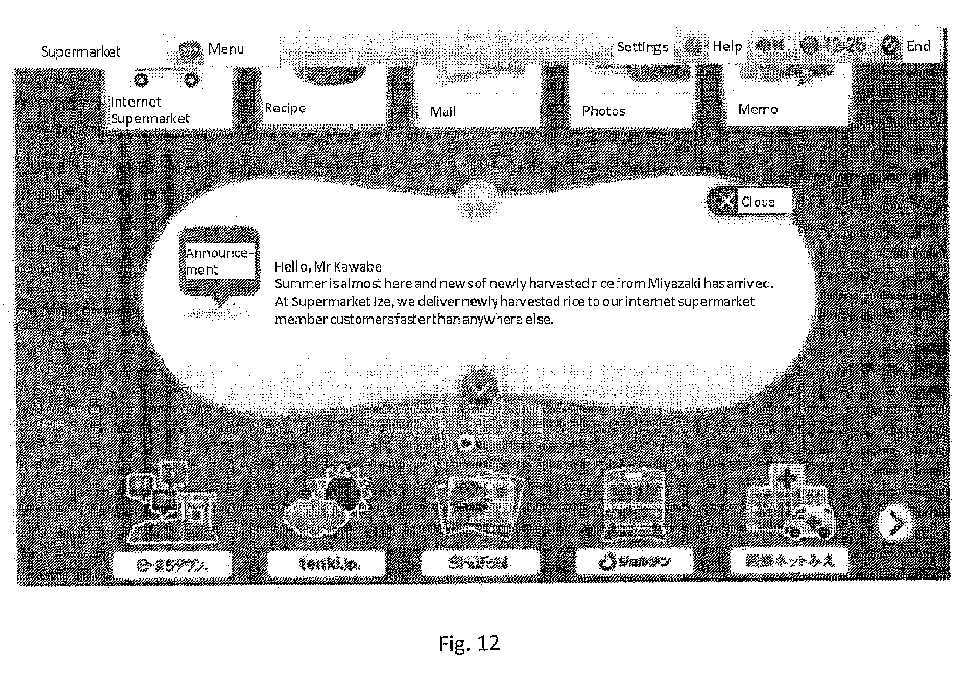

Fig. 12 is an example of a message displayed according to an internet supermarket user. It is possible to promote the use of an internet supermarket by displaying a message to a user corresponding to attributes as shown in Fig. 12.

### (2. Video Content Distribution)

The system related to one embodiment of the present invention can be used to distribute video content.

For example, a video distributor who is a service provider distributes the external memory 400 as a benefit to members of a service already provided by the video distributor or as a campaign or event leaflet at a store.

The video distributor registers an icon linked to video content in the contents database 120 via the interface for service providers 110. At this time, it is possible to register an icon linked to video content corresponding to attributes of a user.

A user who receives the external memory 400 connected the external memory 400 to the client terminal 300 and thereby a screen including the icon linked to the video content is displayed in the client terminal 300.

In the system related to one embodiment of the present invention, because it is possible to distribute certain video content registered in the contents database 120 at a desired time, it is possible to play multiple video content simply by distributing the external memory 400 once and unlike the case of distributing media including video content such as a CD or DVD, it is possible to distribute various video content by distributing the external memory 400 and provide a more attractive service to users.

Furthermore, as a modified example, public signage (public display, digital signage) may be arranged in the client terminal 300. In this case, for example, when the external memory 400 is connected to the client terminal 300, video content such as an advertisement applicable to a user who has the external memory 400 is displayed during a fixed period of time or number of times. In this way, it is possible to display advertisements applicable to users in the street and further increase the advertisement effects due to public signage. In addition, in the case where public information is widely distributed when the external memory is not connected using a public information terminal as the client terminal 300 and the external memory 400 which can specify as user such as an IC card distributed by a public utility such as a Basic Resident Register card etc is connected, it is possible to specify that user and display the most opportune information to that user on the public information terminal. In addition, because it is possible to specify a user it is possible to utilize users opinions with respect to government administration etc. as an easily collectable questionnaire.

### (3. Home Security)

The system related to one embodiment of the present invention can be used in home security system.

That is, the system related to one embodiment of the present invention is connected to a home security web server. Because the application server 100 in the system related to one embodiment of the present invention can be used if the client terminal 300 is connected to the internet and the external memory 400, a user can carry around the external memory 400, connect the external memory 400 to the client terminal 300 and thus can use the system anywhere via display content provided from the application server 100. For example, in the system related to one embodiment of the present invention, when the external memory 400 is connected to the client terminal 300, the application server 100 displays an icon for observing a building in the client terminal 300. When this icon is selected, the web server 200 which is monitoring the building's situation and the client terminal 300 are connected, and the building' situation is displayed on the client terminal 300. In the system related to one embodiment of the present invention, as described above, because a plurality of dedicated browsers 421 compatible with a plurality of platforms are prepared in the external memory 400, it is possible for a user to confirm a building's situation anywhere using the client terminal 300 which is in their vicinity.

### (4. Hospital Care, Visiting Care)

The system related to one embodiment of the present invention can be used in hospital care or visiting care.

That is, the system related to one embodiment of the present invention is connected to a web type electronic health record system. A patient is made to carry the external memory 400 and the patient's external memory 400 is connected to the client terminal 300 when examined by a doctor. If the contents linked with the electronic health record system are registered in advance in the application server 100, it is possible to confirm the electronic health record of that patient without visiting a hospital room, house or place of the patient during a home visit etc. In addition, by registering the content which displays the medicine to be administered in advance and when the patient connects the external memory 400 to the client terminal 400, it is possible for a patient to confirm the medicine that should be administered using a simple operation just be connecting the external memory 400 at anytime. In addition, because each external memory 400 includes a unique ID, there is no risk of accidently referring to a different patient's information when confirming an electronic health record or the medicine to be administered.

### (5. CAD Data used in Building Management, Sharing of Design Data)

The system related to one embodiment of the present invention can be used in sharing of CAD data and design data used in building management.

That is, the system related to one embodiment of the present invention is connected to a database storing CAD data and design data which shows the structure of a building or a web server which can reference that database. When building maintenance is performed, the external memory 400 is distributed or lent to the maintenance provider who needs to confirm the building's plans. When the maintenance provider connected the external memory 400 to the client terminal 300, a Pad PC which can be carried around for example, the client terminal is connected to the application server 100, and when registered contents which are linked to CAD data and design data are selected on a screen sent from the application server 100, the CAD data and design data are displayed on the Pad Pc. In this way, the maintenance provider can confirm the CAD data and design data using a simple operation. In addition, it is possible to provide only data corresponding to certain places within a building from amount the CAD data and design data to the maintenance provider according to the ID in the external memory 400.

CAD data and design data which shows the structure of building includes important information such as building safety information and from the viewpoint of building security, this data should not be viewed more than is necessary by third parties. However, a building maintenance provider often needs to confirm the CAD data and design data related to sections of the building in order to carry out maintenance. Because it is possible to easily provide only the minimum information required for maintenance if the system related to one embodiment of the present invention is used, it is possible to decrease risks related to building security.

### INDUSTRIAL APPLICABILITY OF THE INVENTION

As described above, according to the present invention, a system is provided which guarantees the identity of a user and can carry out trade with a high level of reliability for a service provider. Furthermore, it is possible for a provider to provide services with excellent customization and provide a system which can provide content which more accurately matches users. In addition, a provider can provide a system which can manage users' personal information on its own a database. Because a user is automatically connected to a page which provides a service simply by connecting the external memory distributed by a provider to a client terminal, a system which can perform safe trading is provided without fear of being connected to impersonating pages. Furthermore, because the system is easy, has excellent security and removes the fear of operational errors, a system is provided which can reduce the obstacles to use of a service and increase significantly the number of service users. Furthermore, for a provider of an application server, a system is provided which can easily perform billing according to the number of times a service is used by a user by becoming an intermediary between users and service providers. In addition, for a provider of an application server, a system is provided which can carry out business by linking with multiple providers and can reduce management costs since significant additional changes to the system itself are not required by providing the system related to one embodiment of the present invention to a plurality of providers and by being able to customize the design of screen etc. on the provider side. Therefore, the present invention is industrially useful.

### EXPLANATION OF THE REFERENCE SYMBOLS

- 100: Application Server
- 110: Interface for a Service Provider
- 120: Contents Database
- 130: Attribute Information Database
- 140: ID Receiving Part
- 145: Authentication Part
- 150: Attribute Information Reading Part
- 160: Display Contents Generation Part
- 170: Display Contents Sending Part
- 200: Web Server
- 300: Client Terminal
- 400: External Memory
- 411: ID

## Claims

1. A system comprising:
an application server connected to a web server and a client terminal via a network, the terminal being connected to an external memory;
wherein
the application server includes
an interface for a provider of a service receiving input of attribute information of a user of the external memory and contents information from the web server or a terminal of a service provider managing the web server;
a contents database correlating and storing the attribute information and contents information received from the interface for a provider of a service;
an attribute database correlating and storing an ID stored in the external memory and the attribute information of a user of the external memory;
an ID receiving part receiving the ID sent from the client terminal connected to the external memory;
an authentication part judging permission of use of the external memory by referring to the received ID and the attribute information database;
an attribute information reading part reading the attribute information correlated with the ID received from the ID receiving part and stored in the attribute information database;
a display contents generation part reading contents information correlated with the attribute information read by the attribute information reading part and stored in the contents database and generates display contents; and
a display contents sending part sending the display contents;
and wherein
the external memory is stored with a program for reading the ID stored in the external memory to the client terminal, sending the read ID to the application server from the client terminal, the client terminal receives the display contents sent from the application server, and the program displays the received display contents on a screen of the client terminal.

2. The system according to claim 1 wherein the external memory can be attached and removed from the client terminal.

3. The system according to claim 2 wherein the external memory is a flash memory connected to the client terminal via a USB interface.

4. A system comprising:
an application server connected to a web server and a client terminal via a network, the terminal being connected to an external memory;
wherein
the application server includes
an interface for a provider of a service receiving input of attribute information of a user of the external memory and contents information from the web server or a terminal of a service provider managing the web server;
a contents database correlating and storing the attribute information and contents information received from the interface for a provider of a service;
an attribute database correlating and storing an ID stored in the external memory and the attribute information of a user of the external memory;
an ID receiving part receiving the ID sent from the client terminal connected to the external memory;
an authentication part judging permission of use of the external memory by referring to the received ID and the attribute information database;
an attribute information reading part reading the attribute information correlated with the ID received from the ID receiving part and stored in the attribute information database;
a display contents generation part reading contents information correlated with the attribute information read by the attribute information reading part and stored in the contents database and generates display contents; and
a display contents sending part sending the display contents.

5. The system according to claim 4 wherein the external memory is a non-contact type IC card connected with the client terminal via wireless communication.

6. The system according to claim 4 wherein the external memory is a contact type IC card.

7. The system according to claim 1 wherein the external memory includes a separate authentication means to an ID.

8. The system according to claim 7 wherein the authentication means includes a means for communicating with the non-contact type IC card.

9. The system according to claim 7 wherein the authentication means includes a means for communicating with the contact type IC card.

10. The system according to claim 7 wherein the application server is also connected to a settlement system via a network.

11. The system according to claim 2 wherein display of the display contents of the client terminal is terminated when the external memory is removed from the client terminal.

12. The system according to claim 1 wherein the ID includes an effective period.

13. The system according to claim 2 wherein the external memory is arranged with a plurality of programs and can be connected to the client terminal on a plurality of different platforms.

14. The system according to claim 1 wherein the authentication means issues an authentication token when the external memory can be used and sends the token to the client terminal.

15. A method of operating a system comprising;
an application server connected to a web server and a client terminal via a network including an attribute database correlating and storing an ID stored in an external memory connected to the client terminal and attribute information of a user of the external memory, the application server
receiving input of attribute information of a user and contents information from the web server or a terminal of a service provider managing the web server; and
correlating and storing the received attribute information and contents information in a contents database;
the client terminal
reading a program stored in the external memory and executing the program; and
reading an ID stored in the external memory by execution of the program and sending the ID to the application server;
the application server
receiving the ID from the client terminal;
reading the attribute information correlated with the received ID and stored in the attribute information database;
reading the contents information correlated with the read attribute information and stored in the contents database, generating display contents and sending the display contents to the client terminal; and
the client terminal displaying the received display contents on a screen.

16. A method of operating a system comprising;
an application server connected to a web server and a client terminal via a network including an attribute database correlating and storing an ID stored in an external memory connected to the client terminal and attribute information of a user of the external memory, the application server
receiving input of attribute information of a user and contents information from the web server or a terminal of a service provider managing the web server; and
correlating and storing the received attribute information and contents information in a contents database;
the client terminal
reading a program stored in the client terminal and executing the program; and reading an ID stored in the external memory by execution of the program and sending the ID to the application server;
the application server
receiving the ID from the client terminal;
reading the attribute information correlated with the received ID and stored in the attribute information database;
reading the contents information correlated with the read attribute information and stored in the contents database, generating display contents and sending the display contents to the client terminal; and
the client terminal displaying the received display contents on a screen.

17. An external memory connected to a client terminal comprising;
a program reading a stored ID to a client terminal, sending the read ID to an application server connected via a network from the client terminal, sending display contents from the application server to the client terminal, and displaying the received display contents on a screen of the client terminal.
